# EUROPEAN PATENT SPECIFICATION

(11) **EP 2 640 112 B1**
(45) Date of publication and mention of the grant of the patent: **04.03.2020**
(21) Application number: 11840211.4
(22) Date of filing: 09.11.2011
(51) Int. Cl.: H04W 24/08, H04W 24/10

(54) **MOBILE COMMUNICATION METHOD, MOBILE STATION AND RADIO BASE STATION**
MOBILKOMMUNIKATIONSVERFAHREN, MOBILSTATION UND FUNKBASISSTATION
PROCÉDÉ DE COMMUNICATION MOBILE, STATION MOBILE ET STATION DE BASE

(30) Priority: 12.11.2010 JP 2010254326
(43) Date of publication of application: 18.09.2013
(73) Proprietor: NTT DOCOMO, INC., Chiyoda-ku Tokyo 100-6150 (JP)
(72) Inventor: IWAMURA, Mikio, Tokyo 100-6150 (JP); HAPSARI, Wuri Andarmawanti, Tokyo 100-6150 (JP)
(74) Representative: Hoffmann Eitle
(86) International application number: PCT/JP2011/075845
(87) International publication number: WO 2012/063872

(56) References cited:
- EP-A2- 2 077 690
- WO-A1-2009/038368
- JP-A- 2002 531 991
- JP-A- 2003 309 516
- JP-A- 2006 246 032
- JP-A- 2006 514 813
- NTT DOCOMO ET AL: "Speed dependent scaling of mobility control parameters", 3GPP DRAFT; R2-075149 SPEED DEPENDENT CONTROL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Jeju; 20071112, 12 November 2007 (2007-11-12), XP050137596, [retrieved on 2007-11-12]
- 'Radio measurement collection for Minimization of Drive Tests(MDT)' 3GPP TS 37.320 VL.0.0, 3GPP August 2010, pages 8 - 13, XP050442198
- 'Study on Minimization of drive-tests in Next Generation Networks' 3GPP TR 36.805 V9.0.0, 3GPP December 2009, page 11, XP050401520

## Description

### [Technical Field]

The present invention relates to a mobile communication method and a radio base station.

### [Background Art]

WO 2009/038368 A1 discloses a method of performing a cell reselection procedure in a wireless communication system including evaluating priorities of a serving cell and neighbor cells.

EP 2 077 690 A2 discloses a method, a device and a computer program product for performing cell reselection based on priorities, where the method includes measuring a signal of a candidate cell, and selecting the candidate cell when the signal characteristic of the candidate cell satisfies a certain criterion for a certain time duration.

In an LTE (Long Term Evolution) scheme, "MDT (Minimisation of Drive Tests)" is defined. Conventionally, "MDT" is a concept according to which the area quality measurement that was performed by an operator by using a radio wave measuring vehicle, etc., is substituted by a measurement report from a mobile station UE.

In the MDT, during the Logged MDT mode, the mobile station UE is configured to perform a measurement process of the radio quality on a visiting cell (serving cell) and a neighboring cell, and save the measurement result as a log in the memory, and then later on, report the measurement result (that is, report the log) all at one time to a radio base station eNB when a connection is established with the radio base station eNB.

Furthermore, if the location information is available, the mobile station UE logs the location information, together with the above measurement result, and reports the location information, together with the above measurement result, to the radio base station eNB.

### [Citation List]

### [Non Patent Literature]

[NPL 1] 3GPP TS37.320

### [Summary of Invention]

### [Technical Problem]

However, in the conventional Logged MDT mode, the mobile station UE performs nothing but measurement according to a parameter for neighboring cell measurement that is broadcasted in the visiting cell, and only logs the measurement result obtained by the measurement according to a specified logging method.

Here, the parameter that is broadcasted includes a predetermined threshold value S_{search} for a reception level (RSRP: Reference Signal Received Level) or a reception quality (RSRQ: Reference Signal Received Quality) of the visiting cell.

The mobile station UE needs to perform the neighboring cell measurement only when the RSRP (or the RSRQ) is below the predetermined threshold value S_{search}. Thereby, the battery consumption can be controlled.

The predetermined threshold value S_{search} is a parameter that is broadcasted, and is also a parameter that is applied uniformly to all the mobile stations UE within the cell. In order to control the battery consumption, the value of the predetermined threshold value S_{search} is usually set to a low value such that the neighboring cell measurement is performed only at the cell end.

However, in the MDT, it is desired to be able to recognize the propagation status of various cells across a wide range, and it is also desired to be able to acquire the log of the results of neighboring cell measurements performed in a relatively broad range rather than being limited to the cell end. In this case, a problem that exists is that when the predetermined threshold value S_{search} is set to a low value, a sufficient log is not obtained by the MDT.

Thus, the present invention has been achieved in view of the above problem, and an object thereof is to provide a mobile communication method, a mobile station, and a radio base station, with which it is possible to obtain a sufficient log of measurement results with taking into consideration the battery constraints of the mobile station UE, during the Logged MDT mode.

### [Solution to Problem]

The problem of the invention is solved by the subject-matter of the independent claims. Advantageous embodiments are disclosed by the dependent claims.

### [Advantageous Effects of Invention]

As described above, according to the present invention, it is possible to provide a mobile communication method, a mobile station, and a radio base station, with which it is possible to obtain a sufficient log of measurement results with taking into consideration the battery constraints of the mobile station UE, during the Logged MDT mode.

### [Brief Description of Drawings]

[Fig. 1] Fig. 1 is a diagram illustrating the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a diagram illustrating an example of a format of SIB 3 used in the mobile communication system according to the first embodiment of the present invention.
[Fig. 4] Fig. 4 is a diagram illustrating an example of a format of "RRC Connection Release" used in the mobile communication system according to the first embodiment of the present invention.
[Fig. 5] Fig. 5 is a diagram illustrating an example of a format of "Logged Measurement Configuration" used in the mobile communication system according to the first embodiment of the present invention.
[Fig. 6] Fig. 6 is a functional block diagram of a mobile station according to the first embodiment of the present invention.

### [Description of Embodiments]

### (Mobile communication system according to first embodiment of the present invention)

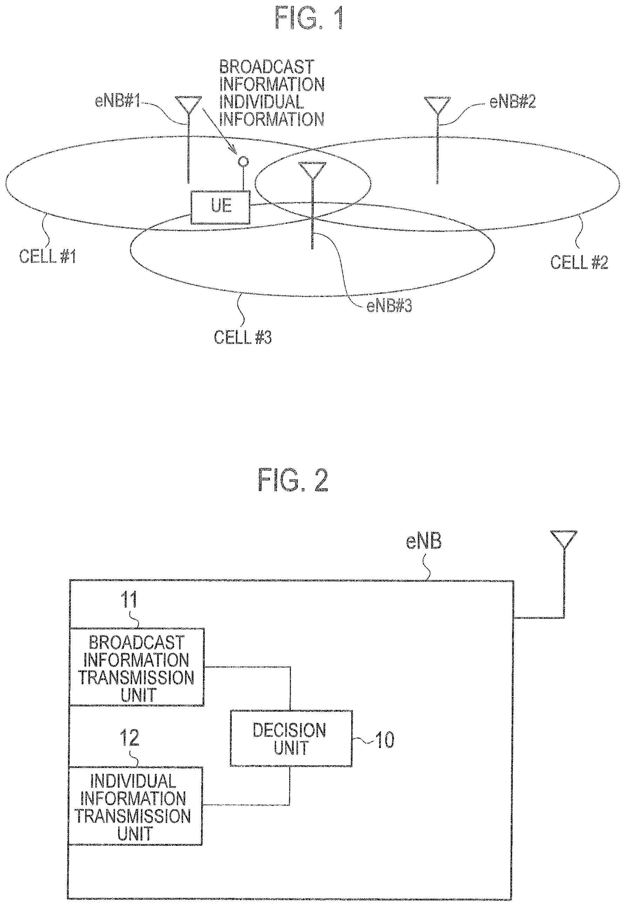

A mobile communication system according to a first embodiment of the present invention will be described with reference to Fig. 1 to Fig. 6

The mobile communication system according to the present embodiment is an LTE mobile communication system, and includes radio base stations eNB#1 through eNB#3 as illustrated in Fig. 1. In this case, cells #1 through #3 are subordinate to the radio base stations eNB#1 through eNB#3.

It is noted that because the function of the radio base stations eNB#1 through #3 is basically the same, hereinafter, the radio base stations eNB#1 through #3 are collectively called "the radio base station eNB".

As illustrated in Fig. 1, the radio base station eNB includes a decision unit 10, a broadcast information transmission unit 11, and an individual information transmission unit 12.

The broadcast information transmission unit 11 is configured to transmit broadcast information, such as MIB (Master Information Block) and SIB (System Information Block) 1 through 3, in a cell subordinate to the radio base station eNB.

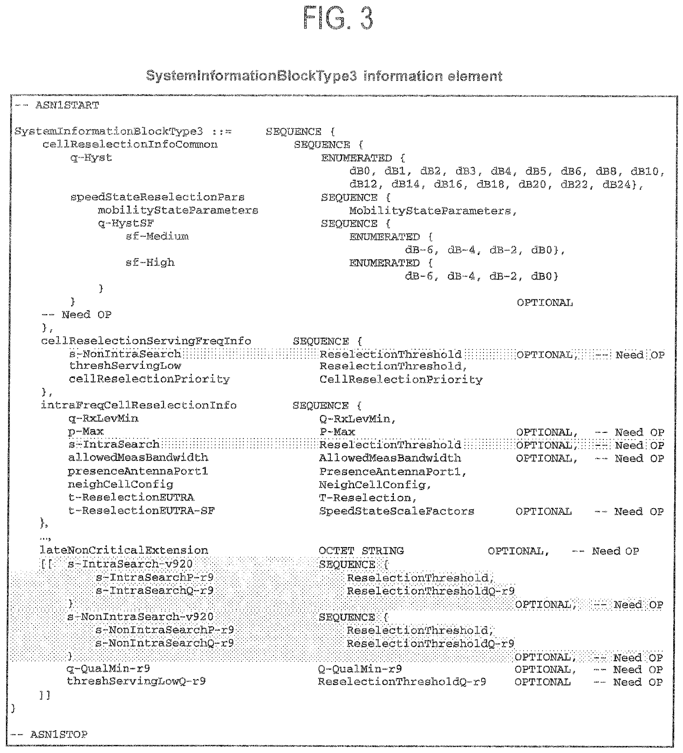

For example, as illustrated in Fig. 3, the broadcast information transmission unit 11 is configured to transmit SIB 3 that includes a predetermined threshold value S_{Search}.

Here, if the mobile communication system according to the present embodiment is an LTE (Rel-9) mobile communication system, S_{IntraSearchRSRP} ("s-IntraSearchP-r9" in Fig. 3), S_{NonIntraSearchRSRP} ("s-NonIntraSearchP-r9" in Fig. 3), S_{IntraSearchRSRQ} ("s-IntraSearchQ-r9" in Fig. 3), or S_{NonIntraSearchRSRQ} ("s-NonIntraSearchQ-r9" in Fig. 3 can be set as the predetermined threshold value S_{Search}.

On the other hand, if the mobile communication system according to the present embodiment is an LTE (Rel-8) mobile communication system, S_{IntraSearchRSRP} or S_{NonIntraSearchRSRP} can be set as the predetermined threshold value S_{Search}.

The individual information transmission unit 12 is configured to transmit individual information such as "RRC Connection Release" and "Logged Measurement Configuration" to the mobile station UE that is in a connected state in a cell subordinate to the radio base station eNB.

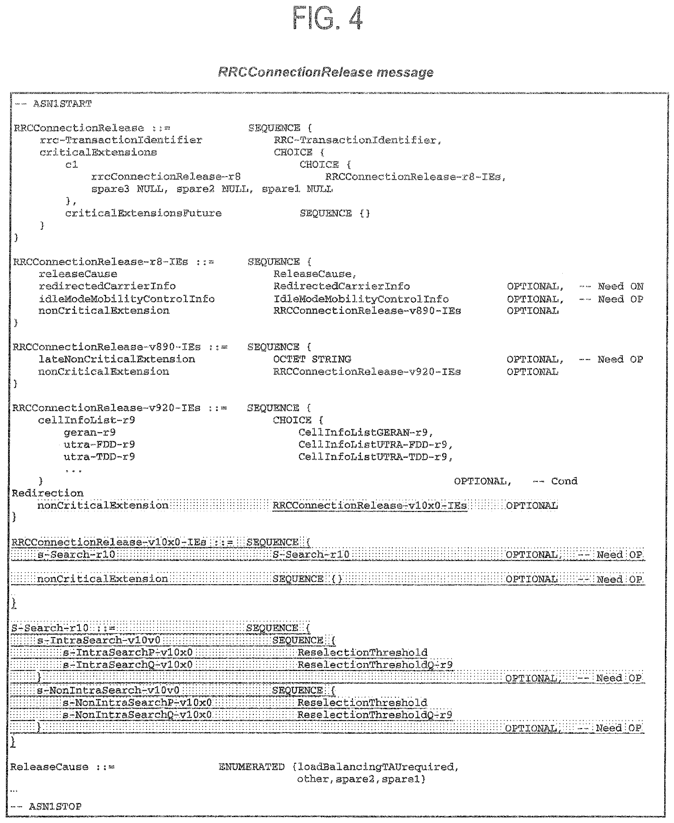

For example, as illustrated in Fig. 4, the individual information transmission unit 12 may be configured to notify a predetermined parameter S_{Search/Dedicated} ("s-Search-r10" in Fig. 4) by "RRC Connection Release", to the mobile station UE that is in a connected state in a cell subordinate to the radio base station eNB.

In this case, S_{IntraSearchRSRP} ("s-IntraSearchP-v10x0" in Fig. 4), S_{IntraSearchRSRQ} ("s-IntraSearchQ-v10x0" in Fig. 4), S_{NonIntraSearchRSRP} ("s-NonIntraSearchP-v10x0" in Fig. 4), or S_{NonIntraSearchRSRQ} ("s-NonIntraSearchQ-v10x0" in Fig. 4) can be set as the predetermined parameter S_{Search/Dedicated}.

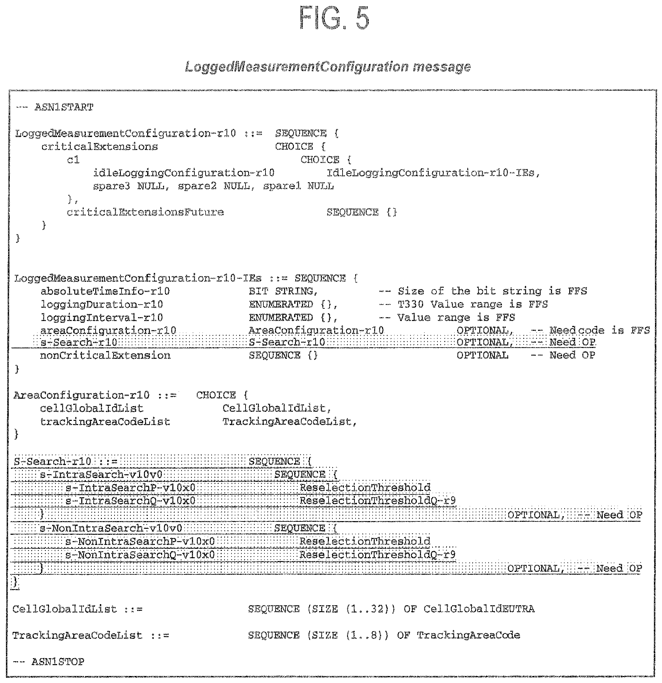

Similarly, as illustrated in Fig. 5, the individual information transmission unit 12 may be configured to notify a predetermined parameter S_{Search/Dedicated} ("s-Search-r10" in Fig. 5) by "Logged Measurement Configuration", to the mobile station UE that is in a connected state in a cell subordinate to the radio base station eNB.

S_{IntraSearchRSRP} ("s-IntraSearchP-v10x0" in Fig. 5), S_{IntraSearchRSRQ} ("s-IntraSearchQ-v10x0" in Fig. 5), S_{NonIntraSearchRSRP} ("s-NonIntraSearchP-v10x0" in Fig. 5), or S_{NonIntraSearchRSRQ} ("s-NonIntraSearchQ-v10x0" in Fig. 5) can be set as the predetermined parameter S_{Search/Dedicated}.

It must be noted that the value of the predetermined parameter S_{Search/Dedicated} included in "RRC Connection Release" and "Logged Measurement Configuration" may be an absolute value, or may be an offset value (differential value) for the predetermined threshold value S_{search} included in SIB 3.

The mobile station UE moves across a plurality of cells in an idle state, and therefore, if the value of the predetermined parameter S_{Search/Dedicated} is set to an offset value for the predetermined threshold value S_{Search}, then when the predetermined threshold value S_{search} that is broadcasted in each cell differs due to reasons such as the difference in the cell shape, the difference in the predetermined threshold value S_{search} of each cell can be reflected.

The decision unit 10 is configured to decide the value of the predetermined parameter S_{Search/Dedicated}, based on "UE Capability" and "SPID (Subscriber Profile Identifier for RAT/frequency priority)" of the mobile station UE.

In this case, the decision unit 10 may set such that the value of the predetermined parameter S_{Search/Dedicated} is larger than the predetermined threshold value S_{Search}.

For example, the decision unit 10 can set the value of the predetermined parameter S_{Search/Dedicated} for a mobile station UE (for example, a vehicle-mounted mobile station UE and a vending machine-loaded mobile station UE) having less battery constraints, to be larger than the predetermined threshold value S_{Search}.

Furthermore, the decision unit 10 can set the value of the predetermined parameter S_{Search/Dedicated} for a mobile station UE in which the MDT is set, to be larger than the predetermined threshold value S_{Search}. In such a case, by notifying the predetermined parameter S_{Search/Dedicated} only to the mobile station UE in which the MDT is performed, and not notifying the predetermined parameter S_{Search/Dedicated} to the mobile station UE in which the MDT is not performed, and using the predetermined threshold value S_{search}, the individual information transmission unit 12 can reduce the consumption of battery in the mobile station UE in which the MDT is not performed.

In the LTE scheme, when the mobile station UE is in the Attached state, the "UE Capability" is notified from the mobile station UE to the mobile management node MME through the radio base station eNBE#1, and when the mobile station UE is in the idle state, the mobile management node MME retains the "UE Capability".

Also, when the mobile station UE changes to the connected state, the mobile management node MME notifies the "UE Capability" to the radio base station eNB.

In this case, when the radio base station eNB cannot acquire the "UE Capability" from the mobile management node MME, the radio base station eNB can acquire the "UE Capability" from the mobile station UE.

Furthermore, "SPID" is the information that is notified by the mobile management node MME to the radio base station eNB, when the mobile station UE changes to the connected state. "SPID" is an index that can be used when the operator defines the terminal type and the contract type.

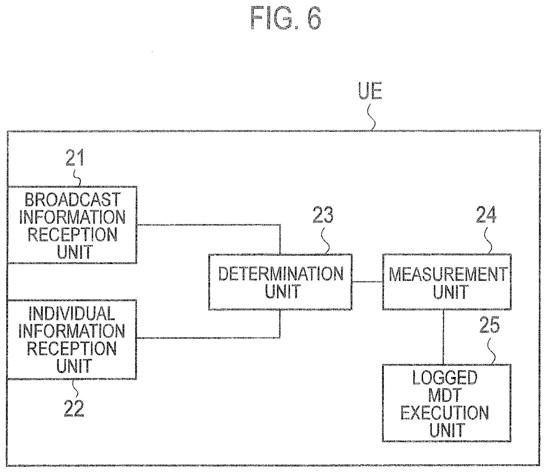

As illustrated in Fig. 6, the mobile station UE includes a broadcast information reception unit 21, an individual information reception unit 22, a determination unit 23, a measurement unit 24, and a Logged MDT execution unit 25.

The broadcast information reception unit 21 is configured to receive the broadcast information, for example, the SIB 3 that includes the predetermined threshold value S_{search}, in a cell in which the mobile station UE is in an idle state.

The individual information reception unit 22 is configured to receive the individual information, for example, the "RRC Connection Release" and the "Logged Measurement Configuration" that include the predetermined parameter S_{Search/Dedicated}, from the radio base station eNB#1 that manages the cell in which the mobile station UE is in the connected state.

The determination unit 23 is configured to determine whether or not neighboring cell measurement (that is, the neighboring cell search and the measurement of reception level and reception quality of the detected neighboring cell) needs to be performed by using the radio quality (for example, the RSRP and the RSRQ) of a cell in which the mobile station UE is in the idle state, and the predetermined threshold value S_{Search} included in the SIB 3.

Specifically, only when the RSRP of a cell in which the mobile station UE is in the idle state is lower than the S_{IntraSearchRSRP} included in the SIB 3, the determination unit 23 may be configured to determine that the neighboring cell measurement needs to be performed for a neighboring cell that is using the same frequency as the cell.

Alternatively, only when the RSRQ of a cell in which the mobile station UE is in the idle state is lower than the predetermined threshold value S_{IntraSearchRSRQ} included in the SIB 3, the determination unit 23 may be configured to determine that the neighboring cell measurement needs to be performed for a neighboring cell that is using the same frequency as the cell.

Furthermore, only when the RSRP of a cell in which the mobile station UE is in the idle state is lower than the predetermined threshold value S_{NonIntraSearchRSRP} included in the SIB 3, the determination unit 23 may be configured to determine that the neighboring cell measurement needs to be performed for a neighboring cell that is using a frequency (RAT: Radio Access Technology) different from the cell.

In addition, only when the RSRQ of a cell in which the mobile station UE is in the idle state is lower than the predetermined threshold value S_{NonIntraSearchRSRQ} included in the SIB 3, the determination unit 23 may be configured to determine that the neighboring cell measurement needs to be performed for a neighboring cell that is using a frequency (RAT) different from the cell.

According to the above configuration, the mobile station UE that is in an idle state in a cell subordinate to the radio base station eNB is configured to perform the neighboring cell measurement only when the radio quality of the cell is lower than the predetermined threshold value that is broadcasted by the radio base station eNB, and therefore, the consumption of battery of the mobile station UE can be reduced.

Furthermore, the determination unit 23 is configured to determine whether or not the neighboring cell measurement needs to be performed, by using the radio quality (for example, the RSRP or RSRQ) of the cell in which the mobile station UE is in the Idle state, and the predetermined parameter S_{Search/Dedicated}, when a predetermined parameter S_{Search} is acquired by the individual information reception unit 22.

When the value of the predetermined parameter S_{Search/Dedicated} is an absolute value, the determination unit 23 may be configured to determine whether or not the neighboring cell measurement needs to be performed, without using the predetermined threshold value S_{Search}.

On the other hand, when the value of the predetermined parameter S_{Search/Dedicated} is an offset value for the predetermined threshold value S_{search}, the determination unit 23 may be configured to determine whether or not the neighboring cell measurement needs to be performed, by using the radio quality RSRP or RSRQ of the cell #1, the predetermined parameter S_{Search/Dedicated}, and the predetermined threshold value S_{Search}.

Specifically, only when the RSRP of a cell in which the mobile station UE is in the idle state is lower than the predetermined parameter S_{IntraSearchRSRP} included in the "RRC Connection Release/Logged Measurement Configuration", the determination unit 23 may be configured to determine that the neighboring cell measurement needs to be performed for a neighboring cell (for example, the cell #2) that is using the same frequency as the cell.

Alternatively, only when the RSRQ of a cell in which the mobile station UE is in the idle state is lower than the predetermined parameter S_{IntraSearchRSRQ} included in the "RRC Connection Release/Logged Measurement Configuration", the determination unit 23 may be configured to determine that the neighboring cell measurement needs to be performed for a neighboring cell (for example, the cell #2) that is using the same frequency as the cell.

Furthermore, only when the RSRP of a cell in which the mobile station UE is in the idle state is lower than the predetermined parameter S_{NonIntraSearchRSRP} included in the "RRC Connection Release/Logged Measurement Configuration", the determination unit 23 may be configured to determine that the neighboring cell measurement needs to be performed for a neighboring cell (for example, the cell #3) that is using a frequency (RAT) different from the cell.

In addition, only when the RSRQ of a cell in which the mobile station UE is in the idle state is lower than the predetermined parameter S_{NonIntraSearchRSRQ} included in the "RRC Connection Release/Logged Measurement Configuration", the determination unit 23 may be configured to determine that the neighboring cell measurement needs to be performed for a neighboring cell (for example, the cell #3) that is using a frequency (RAT) different from the cell.

The measurement unit 24 is configured to perform the neighboring cell measurement based on the determination result of the determination unit 23. Furthermore, the measurement unit 24 is configured to measure the radio quality of the cell #1.

The Logged MDT execution unit 25 is configured to execute the Logged MDT based on the measurement result by the measurement unit 24.

For example, the Logged MDT execution unit 25 is configured to save, as a log, the measurement result of the radio quality (for example, the RSRP or the RSRQ) of the cell #1 and the neighboring cells #2 and #3 that is measured by the measuring unit 24, and then report a log to the radio base station eNb#1 when the connected state occurs in the cell #1.

According to the mobile communication system of the first embodiment of the present invention, because the mobile station UE is configured to determine whether or not the neighboring cell measurement needs to be performed, by using the radio quality of the cell in which the mobile station UE is in the idle state, and the predetermined parameter S_{Search/Dedicated} included in the "RRC Connection Release" and the "Logged Measurement Configuration", that is, because the neighboring cell measurement (that is, the Logged MDT) need not be performed when the radio quality of the cell in which the mobile station UE is in the idle state is good, the consumption of battery can be reduced.

Furthermore, in the mobile communication system according to the first embodiment of the present invention, by setting the value of the predetermined parameter S_{Search/Dedicated} within the "RRC Connection Release/Logged Measurement Configuration" larger than the value of the predetermined threshold value S_{search} within the SIB 3, the geographical range of performing the neighboring cell measurement can be expanded, and many more Logged MDT measurement results can be acquired.

The reason for this is that given the property of the neighboring cell measurement, even if the measurment is not performed, no problem occurs, as long as the radio quality of a cell in which the mobile station UE is in the idle state is good; however, given the property, the Logged MDT is essentially preferred to be performed regardless of whether the radio quality of a cell in which the mobile station UE is in the idle state is good or bad.

In addition, the operation of the above-mentioned radio base station eNB or mobile station UE may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the radio base station eNB and the mobile station UE. Furthermore, such a storage medium and processor may be arranged in the radio base station eNB and the mobile station UE as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing the scope of the present invention defined by the claims. Therefore, the description of the specification is intended for explaining the example only and does not impose any limited meaning to the present invention.

### [Reference Signs List]

- eNB: Radio base station
- 10: Decision unit
- 11: Broadcast information transmission unit
- 12: Individual information transmission unit
- UE: Mobile station
- 21: Broadcast information reception unit
- 22: Individual information reception unit
- 23: determination unit
- 24: Measurement unit
- 25: Logged MDT execution unit

## Claims

1. A mobile communication method, comprising:
a step A of transmitting, by a radio base station (eNB), to a mobile station (UE) that is in a connected state in a subordinate cell, a Logged Measurement Configuration Message including a predetermined parameter for neighboring cell measurement in Logged Minimization of Drive Tests, MDT, mode; and
a step B of determining, by the mobile station (UE), whether or not a neighboring cell measurement needs to be performed, by using a radio quality of the cell, and the predetermined parameter, when the mobile station (UE) is in an idle state; wherein
the radio base station (eNB) notifies a value of the predetermined parameter decided based on at least one of capability information of the mobile station (UE) and subscriber profile information, to the mobile station (UE).

2. The mobile communication method according to claim 1, wherein in the step B, if the value of the predetermined parameter is an absolute value, then even when the mobile station (UE) receives broadcast information that includes a predetermined threshold value from the radio base station (eNB), the mobile station (UE) determines whether or not the neighboring cell measurement needs to be performed, without using the predetermined threshold value.

3. The mobile communication method according to claim 1, wherein in the step B, if the value of the predetermined parameter is an offset value for a predetermined threshold value that is included in broadcast information received from the radio base station (eNB), the mobile station (UE) determines whether or not the neighboring cell measurement needs to be performed, by using a radio quality of the cell, the predetermined parameter, and the predetermined threshold value.

4. The mobile communication method according to claim 2 or 3, wherein the value of the predetermined parameter is set so as to be larger than the predetermined threshold value.

5. A radio base station (eNB), configured to communicate with a mobile station (UE), the radio base station (eNB) comprising:
an individual information transmission unit (12) that is configured to transmit individual information in a Logged Measurement Configuration Message including a predetermined parameter for neighboring cell measurement in Logged Minimization of Drive Tests, MDT, mode, to a mobile station (UE) that is in a connected state in a subordinate cell; wherein
the individual information transmission unit (12) is configured to notify a value of the predetermined parameter decided on the basis of at least one of capability information of the mobile station (UE) and subscriber profile information, to the mobile station (UE).

6. The radio base station (eNB) according to claim 5, comprising:
a broadcast information transmission unit (11) that is configured to transmit, in the cell, broadcast information including a predetermined threshold value, wherein
the individual information transmission unit (12) is configured to set the value of the predetermined parameter to be larger than the predetermined threshold value.

## Patentansprüche

1. Mobilkommunikationsverfahren, umfassend:
einen Schritt A zum Übertragen, durch eine Funkbasisstation (eNB), an eine Mobilstation (UE), die in einem verbundenen Zustand in einer untergeordneten Zelle ist, einer "Logged Measurement Configuration"-Nachricht, die einen vorgegebenen Parameter für benachbarte Zellmessung im "Logged Minimization of Drive Tests"-, MDT-, Modus beinhaltet; und
einen Schritt B zum Ermitteln, durch die Mobilstation (UE), ob eine benachbarte Zellmessung durchgeführt werden muss oder nicht, unter Verwendung einer Funkqualität der Zelle und des vorgegebenen Parameters, wenn die Mobilstation (UE) in einem Ruhezustand ist; wobei
die Funkbasisstation (eNB) einen Wert des vorgegebenen Parameters, der basierend auf mindestens einen von Kapazitätsinformationen der Mobilstation (UE) und Teilnehmerprofilinformationen entschieden wird, der Mobilstation (UE) meldet.

2. Mobilkommunikationsverfahren nach Anspruch 1, wobei im Schritt B, falls der Wert des vorgegebenen Parameters ein absoluter Wert ist, selbst dann, wenn die Mobilstation (UE) Rundfunkinformationen, die einen vorgegebenen Schwellwert beinhalten, von der Funkbasisstation (eNB) empfängt, die Mobilstation (UE) ermittelt, ob die benachbarte Zellmessung durchgeführt werden muss oder nicht, ohne den vorgegebenen Schwellwert zu verwenden.

3. Mobilkommunikationsverfahren nach Anspruch 1, wobei im Schritt B, falls der Wert des vorgegebenen Parameters ein Versatzwert für einen vorgegebenen Schwellwert ist, der in Rundfunkinformationen beinhaltet ist, die von der Funkbasisstation (eNB) empfangen werden, die Mobilstation (UE) ermittelt, ob die benachbarte Zellmessung durchgeführt werden muss oder nicht, indem eine Funkqualität der Zelle, der vorgegebene Parameter und der vorgegebene Schwellwert verwendet werden.

4. Mobilkommunikationsverfahren nach Anspruch 2 oder 3, wobei der Wert des vorgegebenen Parameters eingestellt ist, um größer als der vorgegebene Schwellwert zu sein.

5. Funkbasisstation (eNB), die konfiguriert ist, mit einer Mobilstation (UE) zu kommunizieren, wobei die Funkbasisstation (eNB) umfasst:
eine Einzelinformationen-Übertragungseinheit (12), die konfiguriert ist, um Einzelinformationen in einer "Logged Measurement Configuration"-Nachricht, die einen vorgegebenen Parameter für benachbarte Zellmessung im "Logged Minimization of Drive Tests"-, MDT-, Modus beinhaltet, an eine Mobilstation (UE) zu übertragen, die in einem verbundenen Zustand in einer untergeordneten Zelle ist; wobei
die Einzelinformationen-Übertragungseinheit (12) konfiguriert ist, um einen Wert des vorgegebenen Parameters, der auf der Basis der mindestens einen von Kapazitätsinformationen der Mobilstation (UE) und Teilnehmerprofilinformationen entschieden wird, der Mobilstation (UE) zu melden.

6. Funkbasisstation (eNB) nach Anspruch 5, umfassend:
eine Rundfunkinformationsübertragungseinheit (11), die konfiguriert ist, um in der Zelle Rundfunkinformationen zu übertragen, die einen vorgegebenen Schwellwert beinhalten, wobei
die Einzelinformationen-Übertragungseinheit (12) konfiguriert ist, um den Wert des vorgegebenen Parameters einzustellen, größer als der vorgegebene Schwellwert zu sein.

## Revendications

1. Procédé de communication mobile comprenant :
une étape A de transmission par une station de base radio (eNB) à une station mobile (UE) qui est à l'état connecté dans une cellule subordonnée, d'un message de configuration de mesure enregistré comprenant un paramètre prédéterminé pour la mesure de cellules voisines en mode de minimisation enregistrée de tests de conduite MDT ; et
une étape B de détermination par la station mobile (UE) du fait qu'une mesure de cellules voisines doive ou non être effectuée en utilisant une qualité radio de la cellule et le paramètre prédéterminé lorsque la station mobile (UE) est dans un état de repos ; dans lequel :
la station de base radio (eNB) notifie une valeur du paramètre prédéterminé décidée sur la base d'au moins l'une d'informations de capacité de la station mobile (UE) et d'informations de profils d'abonnés à la station mobile (UE).

2. Procédé de communication mobile selon la revendication 1, dans lequel, à l'étape B, si la valeur du paramètre prédéterminé est une valeur absolue, puis même lorsque la station mobile (UE) reçoit des informations de diffusion qui incluent une valeur de seuil prédéterminée de la station de base radio (eNB), la station mobile (UE) détermine si la mesure de cellules voisines doit ou non être effectuée, sans utiliser la valeur de seuil prédéterminée.

3. Procédé de communication mobile selon la revendication 1, dans lequel, à l'étape B, si la valeur du paramètre prédéterminé est une valeur décalée pour une valeur de seuil prédéterminée qui est incluse dans des informations de diffusion reçues de la station de base radio (eNB), la station mobile (UE) détermine si la mesure de cellules voisines doit ou non être effectuée en utilisant une qualité radio de la cellule, le paramètre prédéterminé et la valeur de seuil prédéterminée.

4. Procédé de communication mobile selon la revendication 2 ou 3, dans lequel la valeur du paramètre prédéterminé est réglée de manière à être plus grande que la valeur de seuil prédéterminée.

5. Station de base radio (eNB) configurée pour communiquer avec une station mobile (UE), la station de base radio (eNB) comprenant :
une unité de transmission d'informations individuelles (12) qui est configurée pour transmettre des informations individuelles dans un message de configuration de mesure enregistré incluant un paramètre prédéterminé pour la mesure de cellules voisines dans un mode de minimisation enregistrée de tests de conduite MDT à une station mobile (UE) qui est à l'état connecté dans une cellule subordonnée ; dans laquelle :
l'unité de transmission d'informations individuelles (12) est configurée pour notifier une valeur du paramètre prédéterminé décidée sur la base d'au moins l'une d'informations de capacité de la station mobile (UE) et d'informations de profils d'abonnés à la station mobile (UE).

6. Station de base radio (eNB) selon la revendication 5, comprenant :
une unité de transmission d'informations de diffusion (11) qui est configurée pour transmettre dans la cellule des informations de diffusion incluant une valeur de seuil prédéterminée, dans laquelle :
l'unité de transmission d'informations individuelles (12) est configurée pour régler la valeur du paramètre prédéterminé pour qu'il soit plus grand que la valeur de seuil prédéterminée.
